# EUROPEAN PATENT SPECIFICATION

(11) **EP 2 625 147 B1**
(45) Date of publication and mention of the grant of the patent: **19.02.2020**
(21) Application number: 11779262.2
(22) Date of filing: 07.10.2011
(51) Int. Cl.: C03B 25/00, C03C 21/00

(54) **ANNEALING OF GLASS TO ALTER CHEMICAL STRENGTHENING BEHAVIOR**
TEMPERN VON GLAS ZUR VERÄNDERUNG DES CHEMISCHEN VERSTÄRKUNGSVERHALTENS
RECUISSON DE VERRE POUR MODIFIER LE COMPORTEMENT DE TREMPE CHIMIQUE

(30) Priority: 14.05.2011 US 201113107905; 08.10.2010 US 391526 P
(43) Date of publication of application: 14.08.2013
(73) Proprietor: Apple Inc., Cupertino CA 95014 (US)
(72) Inventor: HILL, Matthew D., Cupertino, CA 95014 (US); PILLIOD, Michael Kane, Cupertino, CA 95014 (US); PREST, Christopher, Cupertino, CA 95014 (US); WEBER, Douglas, Cupertino, CA 95014 (US); MICHAIL, Spyros, Cupertino, CA 95014 (US); PAKULA, David, Cupertino, CA 95014 (US)
(74) Representative: Rooney, John-Paul
(86) International application number: PCT/US2011/055475
(87) International publication number: WO 2012/048293

(56) References cited:
- EP-A1- 1 593 658
- EP-B1- 1 206 422
- DE-A1- 1 496 586
- FR-A1- 2 797 627
- FR-A1- 2 801 302
- US-A- 4 218 230
- US-B1- 6 772 610

## Description

### FIELD OF THE INVENTION

The present disclosure relates generally to glass forming processes and, more particularly, to using an annealing process on a glass member prior to a chemical strengthening process to modify the chemical strengthening behavior of the glass member.

### BACKGROUND OF THE INVENTION

Glass parts, e.g., glass covers and/or displays, are often used in handheld electronic devices. Providing a reasonable level of strength in the glass parts is crucial to reduce the likelihood of failure in the glass parts. As handheld electronic devices are often subject to being dropped or otherwise mishandled, reducing the likelihood of glass parts breaking after being dropped or mishandled is desirable. To this end, glass parts are often chemically treated to increase the strength of the glass parts.

In general, slowly cooled glass such as pot melted glass has qualities that are desired for glass parts used in handheld electronic devices. For example, pot melted glass has chemical strengthening properties and a thermal history that render pot melted glass particularly suitable for use in handheld electronic devices.

Most mass production processes which produce thin glass sheets and, hence, parts in relatively high volumes, require relatively rapid cooling. Pot melting processes, on the other hand, produce a slowly cooled glass that has effectively been annealed.

Mass production processes used to produce glass, which include fusion processes and float processes, generally do not produce glass that has the desirable thermal properties and chemical strengthening properties that may be achieved through pot melting processes. However, such mass production processes are often used, particularly when high volumes of glass parts, *e.g.,* cover glasses for handheld electronic devices, are to be produced.

Therefore, what is desired is a method and an apparatus which allows mass production processes to produce glass that has characteristics similar to those found in pot melted glass.

### SUMMARY

The invention pertains to apparatus, systems and methods for annealing glass to improve the effect of a subsequent chemically strengthening process applied to the glass. For example, embodiment of the invention can improve the thermal properties and chemical strengthening properties of glass produced through fusion or float processes.

The apparatus, systems and methods for annealing and chemically strengthening glass produces glass pieces that may be assembled in relatively small form factor electronic devices such as handheld electronic devices, as for example mobile phones, media players, user input devices (*e.g.,* mouse, touch sensitive devices), personal digital assistants, remote controls, etc.. The apparatus, systems and methods may also be used for glass pieces such as covers or displays for other relatively larger form factor electronic device including, but not limited to including, portable computers, tablet computers, displays, monitors, televisions, etc.

Embodiments of the invention may be implemented in numerous ways, including as a method, system, device, or apparatus (including computer readable media that embody transitory signals). Several embodiments of the invention are discussed below.

According to one aspect, a method for processing a glass part formed using a fusion process or a float process includes annealing the glass part and then chemically strengthening the glass part. Annealing the glass part includes at least heating the glass part at a first temperature and cooling the glass part to a second temperature using a controlled cooling process. Chemically strengthening the glass part includes facilitating an ion exchange between ions included in the glass part and ions included in a chemical strengthening bath. In one embodiment, the glass part is aluminosilicate glass formed using a float process. In such an embodiment, the first temperature may be between approximately 540 degrees Celsius and approximately 550 degrees Celsius.

According to another aspect, a method for processing a glass sheet formed from a fusion process or a float process includes annealing the glass sheet, machining the glass sheet to form a glass part, and chemically strengthening the glass part. Annealing the glass sheet includes at least heating the glass sheet at a first temperature and cooling the glass sheet to a second temperature using a controlled cooling process. Machining the glass sheets includes creating a glass part from the glass sheet. Chemically strengthening the glass part includes facilitating an ion exchange between ions included in the glass part and ions included in a chemical strengthening bath.

The invention provides other embodiments configured to implement aspects of the invention, as well as software (or computer program code) stored in a computer-readable or machine-readable medium (*e.g.,* a tangible storage medium) to control devices to perform these methods.

Other aspects and advantages of the invention will become apparent from the following detailed description taken in conjunction with the accompanying drawings which illustrate, by way of example, the principles of the invention.

### BRIEF DESCRIPTION OF THE DRAWINGS

The accompanying drawings, which are incorporated into and constitute a part of this specification, illustrate one or more example embodiments and, together with the description of example embodiments, serve to explain the principles and implementations associated with the specification.
FIG. 1A is a process flow diagram which illustrates a first method of strengthening a glass part in accordance with an embodiment of the present invention.
FIG. 1B is a process flow diagram which illustrates a second method of strengthening a glass part in accordance with an embodiment of the present invention.
FIG. 2 is a diagrammatic representation of a process of strengthening glass in accordance with an embodiment of the present invention.
FIG. 3A is a representation of an annealed glass member being introduced into a chemical strengthening bath at a time t1 in accordance with an embodiment of the present invention.
FIG. 3B is a representation of an annealed glass member, e.g., annealed glass member 304 of FIG. 3A, undergoing an ion exchange process at a time t2 in accordance with an embodiment of the present invention.
FIG. 4 is a process flow diagram which illustrates a method of determining parameters for use in an annealing process that produces annealed glass that is to be chemically strengthened in accordance with an embodiment of the present invention.
FIG. 5 is a graphical representation of exemplary annealing profiles in accordance with an embodiment of the present invention.
FIG. 6 is a diagrammatic representation of a handheld electronic device.

### DETAILED DESCRIPTION OF EMBODIMENTS OF THE INVENTION

The invention pertains to apparatus, systems and methods for improving compressive stress in glass members. By annealing a glass part prior to applying a chemical strengthening process to the glass part, the compressive stress achieved by chemically strengthening the glass part may be increased. A higher compressive stress achieved in a glass part may result in improved strength and performance in at least some measures of reliability. Annealing the glass part includes heating the glass part to a high temperature, then slowly cooling the glass part such that a higher density is achieved at least on the surfaces, e.g., faces, of the glass part. When a higher density is achieved at least on the surfaces of a glass part, a subsequent ion exchange may provide for a stronger glass part. The high temperature to which the glass part is heated is an annealing temperature, or a temperature at which glass may relieve stress without deforming.

The apparatus, systems, and methods of the present invention allow for the formation of glass parts such as glass members that are suitable for glass covers assembled in small form factor electronic devices, such as handheld electronic devices, as for example mobile phones, media players, user input devices (*e.g.,* mouse, touch sensitive devices), personal digital assistants, remote controls, etc. The apparatus, systems, and methods may also be used for glass covers or displays for other relatively larger form factor electronic devices such as portable computers, tablet computers, displays, monitors, televisions, etc.

Embodiments are described herein in the context of strengthening glass using an annealing process prior to a chemical strengthening process. The following detailed description is illustrative only, and is not intended to be in any way limiting. Other embodiments will readily suggest themselves to skilled persons having the benefit of this disclosure. Reference will now be made in detail to implementations as illustrated in the accompanying drawings. The same reference indicators will generally be used throughout the drawings and the following detailed description to refer to the same or like parts.

In the interest of clarity, not all of the routine features of the implementations described herein are shown and described. It will, of course, be appreciated that in the development of any such actual implementation, numerous implementation-specific decisions must be made in order to achieve the developer's specific goals, such as compliance with application and business related constraints, and that these specific goals will vary from one implementation to another and from one developer to another. Moreover, it will be appreciated that such a development effort might be complex and time-consuming, but would nevertheless be a routine undertaking of engineering for those of ordinary skill in the art having the benefit of this disclosure.

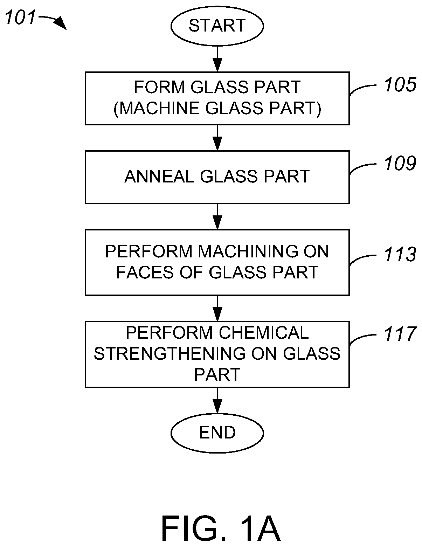

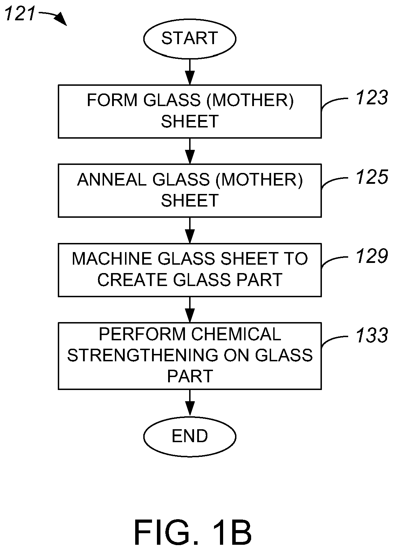

Annealing mass-produced float glass as well as glass from other high volume glass processes, e.g., fusion process glass, provides the glass with a thermal history that is similar to that of slowly cooled glass such as pot melted glass substantially without requiring slow cooling. An annealing process that is applied to glass prior to a chemical strengthening process may be applied either to a glass part to or to a glass sheet from which a glass part is to be cut or otherwise formed. With reference to FIG. 1A, a process of strengthening a glass part that involves annealing the glass part after the glass part has been formed, and with reference to FIG. 1B, a process of strengthening a glass part that involves annealing a glass sheet prior to forming the glass part from the glass sheet will be described.

FIG. 1A is a process flow diagram which illustrates a method of strengthening a glass part that includes annealing the glass part in accordance with an embodiment of the present invention. A method 101 of strengthening a glass part begins at step 105 in which a glass part is formed. Forming a glass part may include using a float process or a fusion process. As will be appreciated by those skilled in the art, a float process generally involves floating molten glass on a surface of molten metal, e.g., tin, and allowing the molten glass to cool. A fusion process generally involves blending raw materials into a glass compositions that is melted and conditioned to create molten glass, The molten glass is fed into a trough until the molten glass flows evenly over sides of the through. The glass then rejoins, or fuses, and is drawn down to form a continuous sheet of flat glass. forming a glass sheet into air from an overflowing trough of molten glass. If a float process or a fusion process results in the formation of a glass part from which a glass part is to be obtained, forming a glass part may include machining, the glass sheet. Machining the glass sheet may include, but is not limited to including, scribing, breaking, cutting, grinding, and/or polishing a glass part out of the glass sheet.

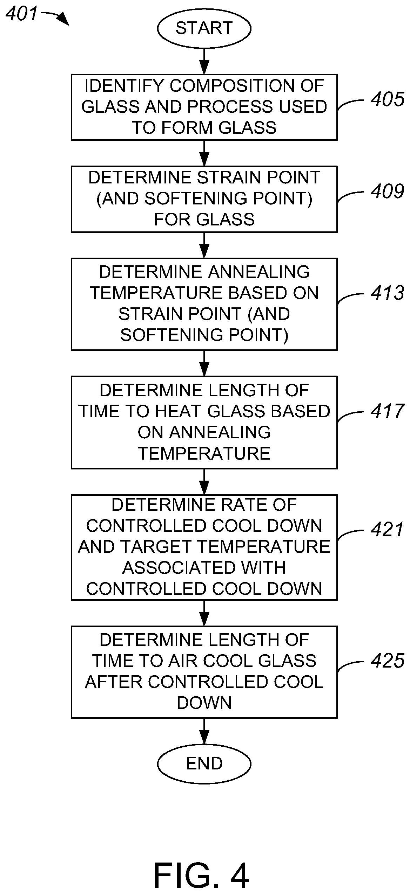

After the glass part is formed in step 105, the glass part is annealed in step 109. Annealing the glass part generally includes subjecting the glass part to a relatively high temperature for a first amount of time, subjecting the glass part to controlled cooling for a second amount of time, and subjecting the glass part to air cooling for a third amount of time. The parameters, e.g., times and temperatures, associated with annealing may be determined based upon any number of factors, as will be discussed below with respect to FIG. 4. In general, however, the parameters associated with annealing may depend upon the composition of the glass part and the techniques used in forming the glass part. For example, parameters used when a glass part is formed from aluminosilicate glass by fusing may differ from parameters used with a glass part is formed from soda lime glass by floating. The dimensions of the glass part may also be accounted for in determining the parameters associated with annealing.

Once the glass part is annealed, the faces of the glass part may be machined in step 113. Machining the faces of the glass part may include polishing the glass to substantially remove defects left on the faces due to annealing and/or chemical strengthening.

Chemical strengthening is performed on the glass part in step 117. In general, chemical strengthening of a glass part includes placing, e.g., submerging, the glass part in an ion exchange bath. The components of an ion exchange bath, as well as the temperature of the bath and an amount of time the glass part is to be exposed to the bath, may vary depending upon factors including, but not limited to including, the size of the glass part, the composition of the glass part, and/or the compressive stress desired in the glass part. Upon chemically strengthening the glass part, the method of strengthening a glass part is completed.

As previously mentioned, in lieu of annealing a glass part, a glass sheet may be annealed prior to a glass part being formed from the glass sheet. FIG. 1B is a process flow diagram which illustrates a method of creating a strengthened a glass part that includes forming the glass part from an annealed glass sheet in accordance with an embodiment of the present invention. A method 121 of creating a strengthened a glass part begins at step 123 in which a glass sheet, or a mother sheet, is formed. In one embodiment, the glass sheet may be an aluminosilicate glass sheet formed using a fusion process. In another embodiment, the glass sheet may be a soda lime glass sheet formed using a float process. Process flow moves from step 123 to step 125 in which the glass sheet is annealed. The glass sheet is typically larger in size than a glass part that is subsequently to be formed from the glass sheet. Annealing the glass sheet generally includes heating the glass sheet, exposing the glass sheet to controlled cooling, and exposing the glass sheet to a secondary cooling phase, e.g., air cooling.

After the glass sheet is annealed, the glass sheet is machined to create a glass part in step 129. Machining the glass sheet may include, but is not limited to including, scribing, breaking, cutting, grinding, and polishing a glass part out of the glass sheet. As annealing removes some stresses from the glass sheet, the machining of an annealed glass sheet may be less complicated than the machining of a glass sheet that has not been annealed.

Once the glass sheet is machined to form the glass part, process flow moves from step 129 to step 133 in which chemical strengthening is performed on the glass part. Upon chemically strengthening the glass part, the method of creating a strengthened glass part is completed.

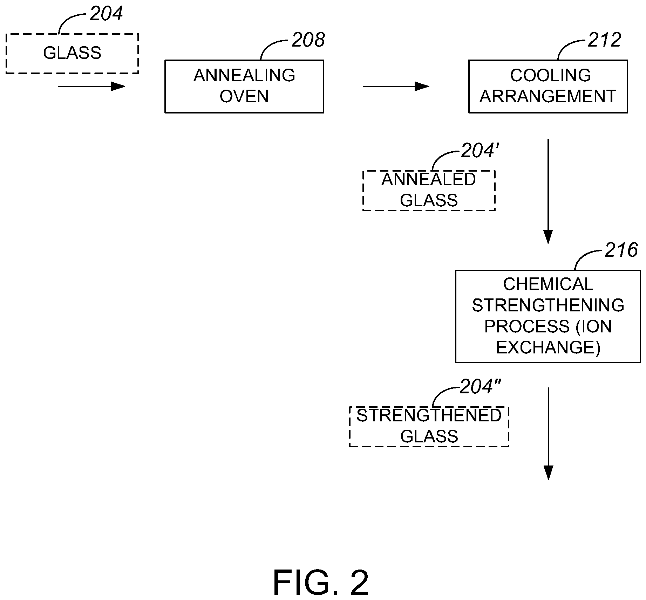

FIG. 2 is a diagrammatic representation of an overall process of strengthening glass in accordance with an embodiment of the present invention. Glass 204, which may either be a glass part or a glass sheet, is provided to an annealing oven 208 or, more generally, an annealing environment. Annealing oven 208 is arranged to maintain a desired temperature to which glass 204 is to be heated, and to expose glass 204 to a controlled cool down. In one embodiment, after glass 204 is exposed to a controlled cool down in annealing oven 208, glass 204 is provided to a cooling arrangement 212, *e.g.,* by a conveyer belt, that allows glass 204 to cool in air, or in a substantially uncontrolled environment. It should be appreciated, however, that cooling in air may instead occur in annealing oven 208. At the completion of air cooling, annealed glass 204' is effectively formed.

Annealed glass 204' is subjected to a chemical strengthening process 216. It should be appreciated that if glass 204 is a glass sheet, annealed glass 204' may be machined to form a glass part prior to being exposed to chemical strengthening process 216. In general, chemical strengthening process 216 results in ions being exchanged between the surfaces of annealed glass 204' and an ion exchange bath. The ion exchange bath typically includes potassium, and potassium ions in the ion exchange bath may engage in an ionic exchange with sodium ions in annealed glass 204'. Chemical strengthening process 216 effectively fortifies annealed glass 204', and results in increased strength in annealed glass 204'. Annealed glass 204' that has been chemically strengthened has higher compressive stresses than chemically strengthened glass that has not been annealed (not shown).

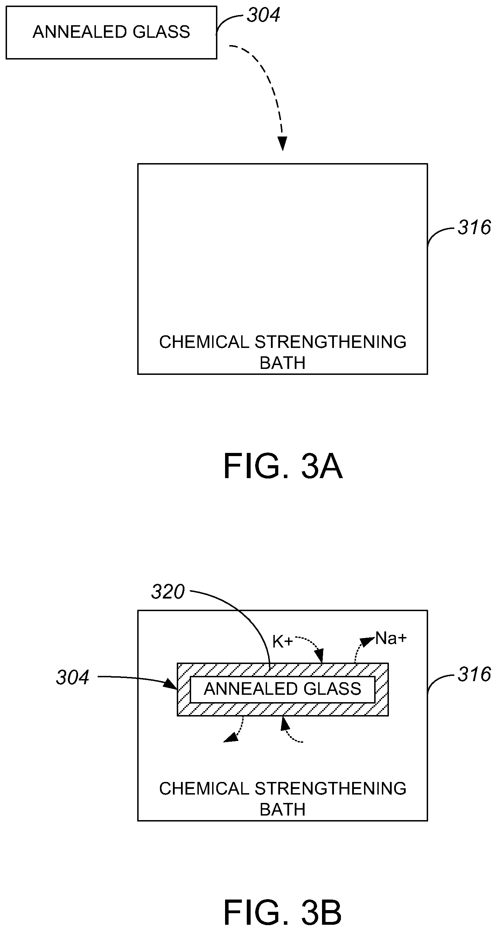

Referring next to FIGS. 3A and 3B, the chemical strengthening of annealed glass will be described. FIG. 3A is a representation of an annealed glass member being introduced into a chemical strengthening bath at a time t1 in accordance with an embodiment of the present invention. At a time t1, annealed glass 304 is introduced into a chemical strengthening bath 316, *e.g.,* an ion exchange bath that includes potassium. Annealed glass 304 may be in the form of a glass part or a glass sheet. Once annealed glass 304 is introduced into chemical strengthening bath 36, an ion exchange process may begin at a time t2. FIG. 3B is a representation of annealed glass member 304 undergoing an ion exchange process at time t2 in accordance with an embodiment of the present invention. When annealed glass 304 is substantially submerged in chemical strengthening bath 316, an ion exchange occurs between potassium ions in chemical strengthening bath 316 and sodium ions in annealed glass 304 or, more specifically, sodium ions located at or near the surface of annealed glass 304. The ion exchange creates strengthened surfaces 320 or faces on annealed glass 304. In one embodiment, surfaces 320 have a higher compressive stress than surfaces of a glass piece (not shown) which has been chemically strengthened but not annealed. By way of example, if annealed glass 304 is created using a float process, annealed glass 304 has compressive stress that is higher than achievable in a piece of float glass that is not annealed, and the compressive stress in annealed glass 304 approaches the compressive stress associated with a comparable piece of slowly cooled glass. One example of a slowly cooled class is pot melted glass.

The thickness, or depth, associated with strengthened surfaces 320 may vary widely. The thickness of annealed glass 304, as well as the length of an ion exchange process, are among factors that may affect the thickness of strengthened surfaces 320. In one embodiment, the thickness of annealed glass 304 may be less than approximately three millimeters, as for example less than approximately one millimeter. The depth of a strengthened surface layer may be between approximately 0.045 and 0.60 millimeters.

As mentioned above, parameters associated with an annealing process may vary widely. In one embodiment, parameters associated with an annealing process may be modified as appropriate to achieve a given, e.g., desired, compressive stress in a glass sheet or part through subsequent chemical strengthening. As a result, reduced cycle time and/or less frequent replacement of strengthening bath chemicals used in a chemical strengthening process may be achieved, thereby reducing the cost associated with the chemical strengthening process.

FIG. 4 is a process flow diagram which illustrates a method of determining parameters for use in an annealing process that produces annealed glass that is to be chemically strengthened in accordance with an embodiment of the present invention. A method 401 of determining parameters for use in an annealing process begins at step 405 in which the composition of the glass that is to be annealed and the process used to form the glass are identified. Once the composition of the glass and the process used to form the glass are identified, a strain point for the glass is determined in step 409. In one embodiment, the softening point of the glass is also determined.

After the strain point for the glass is determined, process flow moves to step 413 in which an annealing temperature for the glass is determined. The annealing temperature for the glass, *e.g.,* the highest temperature that the glass will be heated to during an annealing process, may be slightly less than the temperature associated with the strain point of the glass, or may fall in a range between the temperature associated with the strain point and the temperature associated with the softening point. In one embodiment, for an aluminosilicate glass that is formed using a fusion process, the temperature associated with the strain point of the glass, *i.e.,* a "strain temperature," is approximately 556 degrees Celsius (C) and the annealing temperature may be between approximately 540 degrees and approximately 550 degrees C.

In step 417, the length of time to heat the glass at the selected annealing temperature is determined. Generally, glass may be annealed for substantially any length of time. In one embodiment, glass is annealed for up to approximately four hours. It has been observed that glass annealed at an annealing temperature of approximately 540 degrees for a period of time of more than approximately one hour and up to approximately four hours has a higher strength after a chemical strengthening process than glass that is not annealed. It has also been observed that glass annealed at an annealing temperature of approximately 550 degrees for a period of approximately four hours has a strength after a chemical strengthening process that is close to the strength of pot melt glass.

Once the length of time to heat the glass is determined, a rate of controlled cool down and a target temperature for the controlled cool down are determined in step 421. A length of time for a controlled cool down may also be determined. For example, a rate of controlled cool down may be approximately one half of a degree Celsius per minute, and may occur over approximately five hours for an overall cool down of approximately 150 degrees Celsius from the peak temperature reached in the glass.

In step 425, a length of time to air cool the glass after a controlled cool down is determined. Such a length of time may vary, and may be dependent at least in part upon the temperature achieved at the end of the controlled cool down, the thickness of the glass part, and/or the cooling environment. In one embodiment, the glass may be considered to be fully cooled and ready for chemical strengthening once the glass reaches room temperature. After the length of time to air cool the glass is determined, the method of determining parameters for use in an annealing process is completed.

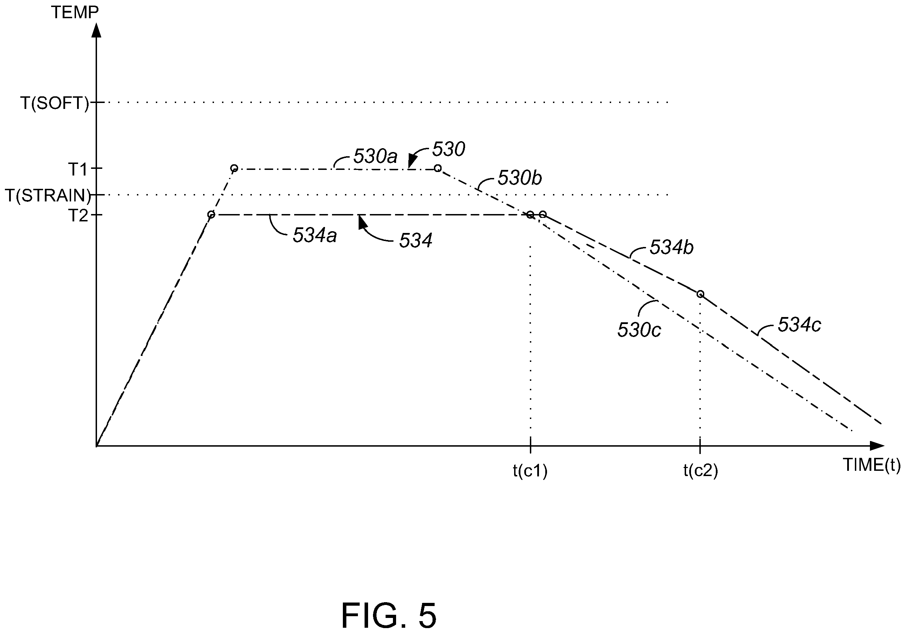

FIG. 5 is a graphical representation of two exemplary annealing profiles in accordance with an embodiment of the present invention. It should be understood that first profile 530 and second profile 534 are provided for illustrative purposes, and are not drawn to scale. In the described embodiment, first profile 530 and second profile 534 are both associated with the same type of glass formed using the same process, e.g., an aluminosilicate glass formed using a fusion process.

First profile 530 is a temperature profile associated with glass, e.g., a glass member, that is being annealed. First profile 530 has an annealing temperature T1 that is higher than a strain temperature T(strain) but lower than a softening temperature T(soft). In general, annealing temperature T1 may be between approximately 95 percent of and approximately 105 percent of strain temperature T(strain). Annealing temperature T1 is maintained for any suitable amount of time after the temperature is ramped up to annealing temperature T1, as shown by first profile 530. A suitable amount of time to maintain annealing temperature T1 may be, but is not limited to being, approximately one hour, approximately two hours, or approximately four hours. Annealing temperature T1 is maintained as shown by segment 530a for as long as necessary to achieve desired qualities in a glass member. The amount of time needed for the temperature to ramp up from room temperature, *e.g.,* an ambient temperature, to annealing temperature T1 may be approximately two hours, although it should be appreciated that the amount of time may vary widely.

Once desired qualities are achieved in a glass member, first profile 530 indicates a controlled cool down in segment 530b. A controlled cool down may, in one embodiment, occur over a period of up to approximately five hours. In one embodiment, a controlled cool down may be used to cool glass at a substantially constant rate, *e.g.,* a rate of approximately 0.5 degrees Celsius per minute. Such a substantially constant rate may be used to cool the temperature of a glass member by between approximately 100 degrees Celsius to approximately 150 degrees Celsius.

Segment 530c of first profile 530 indicates an air cooling period which begins at a time t(c1), when controlled cool down segment 530b ends. It should be appreciated that controlled cool down segment 530b generally ends at a fixing temperature associated with the glass. The amount of time needed for secondary cooling *e.g.,* air cooling, is dependent in part upon the ambient temperature, air flow, and/or other conditions in the environment. The air cooling period generally ends when a glass member reaches room temperature.

Second profile 534 has an annealing temperature T2 that is lower than both strain temperature T(strain) and softening temperature T(soft). In one embodiment, when strain temperature T(strain) is approximately 556 degrees Celsius, annealing temperature T2 may be between approximately 540 degrees Celsius and approximately 550 degrees Celsius. Annealing temperature T2 is maintained for any suitable amount of time after the temperature is ramped up to annealing temperature T2, as shown by second profile 534. A suitable amount of time to maintain annealing temperature T2 may be, but is not limited to being, approximately one hour, approximately two hours, or approximately four hours. Annealing temperature T2 is maintained as shown by segment 534a for as long as necessary to achieve desired qualities in a glass member. In general, as annealing temperature T2 associated with second profile 534 is lower than annealing temperature T1 associated with first profile 530, the amount of time annealing temperature T2 is maintained is longer than the amount of time annealing temperature T1 is maintained. That is, in general, the lower an annealing temperature, the longer the annealing temperature is maintained to achieve substantially the same level of strengthening. After desired qualities are achieved in a glass member, second profile 534 indicates a controlled cool down in segment 534b. A controlled cool down may, in one embodiment, occur over a period of up to approximately five hours. In one embodiment, a controlled cool down rate is substantially independent of an annealing temperature. Hence, for a particular type of glass formed using a particular process, although different annealing temperatures may be implemented, the controlled cool down rate may be substantially the same regardless of the annealing temperature.

Segment 534c of second profile 534 indicates an air cooling period which begins at a time t(c2), when controlled cool down segment 534b ends. The air cooling period generally ends when a glass member reaches room temperature.

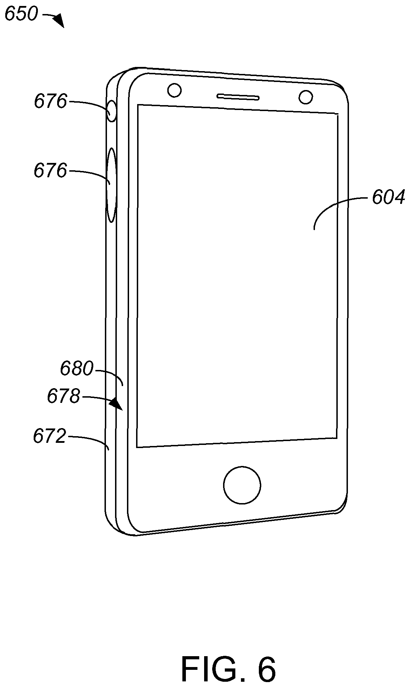

In one embodiment, a glass member or piece that has been strengthened by a chemical strengthening process that follows an annealing process may be a cover piece or a display screen of an electronic device, *e.g.,* a handheld electronic device. With reference to FIG. 6, a handheld electronic device will be described in accordance with an embodiment of the present invention. A handheld electronic device 650 may include a housing 672, *e.g.,* a periphery member, that is arranged to at least partially surround the periphery of device 650 to form some or all of the outer-most side, top and bottom surfaces of device 650. Device 650 also includes a cover piece 678 that is arranged to be substantially coupled to housing 672 to effectively enclose an inner volume of device 650. Cover piece 678 may include a glass member 604, *e.g.,* a display screen of device 650, that has a relatively high compressive strength achieved through annealing and chemical strengthening. In one embodiment, cover piece 678 includes a bezel or a frame 680 in which glass member 604 is held.

Housing 672 may have any suitable shape, including, for example, one or more elements that may be combined to form a ring. Housing 672 may at least partially enclose an inner volume in which electronic device components may be assembled and retained. The shape of housing 672 may substantially define boundaries of the inner volume, and may be determined based upon the size and type of components placed within the inner volume.

Housing 672 may have any suitable size, and the size may be determined based on any suitable criteria. Suitable criteria may include, but are not limited to including, aesthetics or industrial design, structural considerations, components required for a desired functionality, and/or product design. Housing 672 may have any suitable cross-section, including for example a variable cross-section or a constant cross-section. In some embodiments, the cross-section may be selected based on desired structural properties for housing 672. For example, the cross-section of housing 672 may be substantially rectangular, such that the height of housing 672 is substantially larger than the width of housing 672. Such a cross-sectional shape may provide structural stiffness in compression and tension, as well as in bending. In some embodiments, the dimensions of housing 672 cross-section may be determined relative to the dimensions of the components contained by housing 672.

In some embodiments, housing 672 may include features 676. Features 116 may generally include one or more openings, knobs, extensions, flanges, chamfers, or other features for receiving components or elements of the device. Features 676 of housing 672 extend from any surface of housing 672, including for example from internal surfaces, *e.g.,* to retain internal components or component layers, or from external surfaces. In particular, housing 672 may include a slot or opening (not shown) for receiving a card or tray within device 650. Housing 672 may also include a connector opening (not shown), *e.g.,* for a 30-pin connector, through which a connector may engage one or more conductive pins of device 650. Other features 676 included on housing 672 may include, but are not limited to including, an opening for providing audio to a user, an opening for receiving audio from a user, an opening for an audio connector or power supply, and/or features for retaining and enabling a button such as a volume control or silencing switch.

Although only a few embodiments of the present invention have been described, it should be understood that the present invention may be embodied in many other specific forms without departing from the spirit or the scope of the present invention. By way of example, the amount of time an annealed glass part is exposed to a chemical strengthening bath may vary widely, and may depend upon the density of sodium ions near the surface of the annealed glass part. In one embodiment, an annealed glass part may be exposed to a chemical strengthening bath for up to approximately ten hours.

It should be appreciated that annealing may occur in a non-air atmosphere. For instance, annealing may occur in an inert, controlled gaseous environment. Annealing may also occur in a liquid environment. If annealing of glass is performed in a liquid environment, the effects of gravity on the glass causing sagging and/or distortion may be reduced. Therefore, it may be practicable to perform annealing at a higher temperature, e.g., a higher temperature than possible when annealing is performed in an annealing oven.

Cooling profiles are shown in FIG. 5 as ending at approximately the same temperature. Below a certain temperature, the properties of the glass become substantially fixed and controlled cooling is no longer necessary. However, it should be appreciated that controlled cooling to a lower temperature than the temperature at which the properties of glass become substantially fixed is permissible.

Glass parts may be taken straight from a controlled cooling that ends at a fixing temperature and placed in a chemical strengthening bath. That is, an air cooling period may be avoided. Substantially eliminating air cooling, or an uncontrolled cooling process, may reduce the amount of time associated with the overall strengthening of a glass part. Further, in addition to avoiding an air cooling periods, a heating process associated which a chemical strengthening process, e.g., a two hour pre-heating process, may also be substantially avoided.

The size of glass parts that are annealed may vary depending upon the requirements of devices, *e.g.,* handheld electronic devices, that the glass parts are to be a part of. In one embodiment, a glass part may have an area of approximately 113 millimeters by approximately 56 millimeters. The thickness of a glass part may be approximately three millimeters or less, *e.g.,* approximately one millimeter. The size of a glass sheet, or a mother sheet, from which parts are to be obtained may be of substantially any size that may accommodate one or more parts. For example, a glass sheet from which glass parts with areas of approximately 150 millimeters by approximately 50 millimeters are to be formed may be approximately 700 millimeters by approximately 400 millimeters in area.

While glass has been described as being formed using a fusion process or a float process, it should be appreciated that glass is not limited to being formed using a fusion process or a float process. That is, glass formed using substantially any process including a rapid cooling step, *e.g.,* a slump-molded or blown glass, may be subjected to an annealing process prior to a chemical strengthening process such that the glass has a relatively high associated compressive stresses, *i.e.,* compressive stresses that are higher than those that would be obtained without implementing an annealing process.

In general, the steps associated with the methods of the present invention may vary widely. Steps may be added, removed, altered, combined, and reordered without departing from the spirit or the scope of the present invention.

The various aspects, features, embodiments or implementations of the invention described above may be used alone or in various combinations.

While this specification contains many specifics, these should not be construed as limitations on the scope of the disclosure or of what may be claimed, but rather as descriptions of features specific to particular embodiment of the disclosure. Certain features that are described in the context of separate embodiments may also be implemented in combination. Conversely, various features that are described in the context of a single embodiment may also be implemented in multiple embodiments separately or in any suitable subcombination. Moreover, although features may be described above as acting in certain combinations, one or more features from a claimed combination can in some cases be excised from the combination, and the claimed combination may be directed to a subcombination or variation of a subcombination.

In one embodiment, the components, process steps, and/or data structures may be implemented using various types of operating systems, computing platforms, computer programs, and/or general purpose machines. In addition, those of ordinary skill in the art will recognize that devices of a less general purpose nature, such as hardwired devices, field programmable gate arrays (FPGAs), application specific integrated circuits (ASICs), or the like, may also be used without departing from the scope and spirit of the inventive concepts disclosed herein.

While embodiments and applications have been shown and described, it would be apparent to those skilled in the art having the benefit of this disclosure that many more modifications than mentioned above are possible without departing from the inventive concepts herein.

## Claims

1. A method (101) for processing a glass part, of a handheld electronic device, the glass part being formed from a fusion process or a float process, the method comprising:
annealing (109) the glass part of the handheld electronic device,
wherein annealing the glass part includes at least:
heating the glass part at a first temperature,
maintaining the first temperature for a predetermined amount of time, and
cooling the glass part to a second temperature using a controlled cooling process
and **characterised by** chemically strengthening (117) the glass part, wherein chemically strengthening the glass part includes:
placing the glass part of the handheld electronic device in a chemical strengthening bath; and
facilitating an ion exchange between ions included in the glass part and ions included in the chemical strengthening bath;
wherein the chemically strengthening of the glass part of the handheld
electronic device provides an annealed and chemically strengthened glass part for the handheld electronic device and
wherein the glass part is taken from the controlled cooling and placed in the chemical strengthening bath without an intervening uncontrolled cooling process.

2. The method of claim 1 wherein the glass part is an aluminosilicate glass part formed from the float process, and wherein the first temperature is in a range between 540 degrees Celsius and 550 degrees Celsius.

3. The method of claim 2 wherein heating the glass part at the first temperature includes maintaining the first temperature for a length of time between one hour and five hours.

4. The method of any of claims 1-3 wherein the glass is held at the first temperature for a fixed period of time, the first temperature being in a range between 95% of and 105% of a strain temperature of the glass.

5. A method (121) for processing a glass sheet, the glass sheet being formed from a fusion process or a float process, the method comprising:
annealing (125) the glass sheet to provide an annealed glass sheet, wherein annealing the glass sheet includes at least heating the glass sheet at a first temperature and cooling the glass sheet to a second temperature using a controlled cooling process,
and **characterised by** machining (129) the glass sheet to create an annealed glass cover piece of a handheld electronic device from the stress relief annealed glass sheet;
wherein machining the glass sheets includes creating a glass part from the glass sheet; and
chemically strengthening (133) the glass, wherein chemically strengthening the glass part includes:
disposing the glass sheet in a chemical strengthening bath; and
facilitating an ion exchange between ions included in the glass part and ions included in the chemical strengthening bath;
wherein the chemically strengthening of the glass part of the handheld
electronic device provides an annealed and chemically strengthened glass part for the handheld electronic device, and
wherein the glass part is taken from the controlled cooling and placed in the chemical strengthening without an intervening uncontrolled cooling process.

6. The method of claim 5 wherein the glass sheet is an aluminosilicate glass sheet formed from the fusion process, and wherein the first temperature is in a range between 500 degrees Celsius and 600 degrees Celsius.

7. The method of any of claims 5-6 wherein the glass sheet is an aluminosilicate glass sheet formed from the fusion process, and wherein the first temperature is in a range between 540 degrees Celsius and 550 degrees Celsius.

8. The method of claim 7 wherein heating the glass sheet at the first temperature includes maintaining the first temperature for a length of time between one hour and five hours.

9. The method of any of the preceding claims wherein the second temperature is between 100 degrees Celsius and 150 degrees Celsius less than the first temperature, and wherein the controlled cooling process is arranged to cool the glass sheet at afixed rate.

10. The method of claim 9 wherein the fixed rate is 0.5 degrees Celsius per minute.

11. The method of claim 7 wherein cooling the glass sheet to the second temperature includes cooling the glass sheet for up to five hours.

12. The method of any of claims 5-11 wherein machining the glass sheet includes at least one selected from a group including scribing, breaking, and cutting the glass sheet.

## Patentansprüche

1. Verfahren (101) zum Verarbeiten eines Glasteils einer handgehaltenen elektronischen Vorrichtung, wobei das Glasteil durch ein Fusionsverfahren oder ein Float-Verfahren gebildet ist, wobei das Verfahren aufweist:
Tempern (109) des Glasteils der handgehaltenen elektronischen Vorrichtung, wobei das Tempern des Glasteils zumindest umfasst:
Erhitzen des Glasteils auf eine erste Temperatur,
Aufrechterhalten der ersten Temperatur über einen vorbestimmten Zeitraum und Abkühlen des Glasteils auf eine zweite Temperatur unter Verwendung eines kontrollierten Abküh-Prozesses
und **gekennzeichnet durch** chemisches Härten (117) des Glasteils, wobei das chemische Härten des Glasteils umfasst:
Anordnen des Glasteils der handgehaltenen elektronischen Vorrichtung in einem chemischen Härtungs-Bad; und
Erleichtern eines Ionenaustauschs zwischen Ionen, die in dem Glasteil enthalten sind, und Ionen, die in dem chemischen Härtungs-Bad enthalten sind;
wobei das chemische Härten des Glasteils der handgehaltenen elektronischen Vorrichtung ein getempertes und chemisch gehärtetes Glasteil für die handgehaltene elektronische Vorrichtung bereitstellt und
wobei das Glasteil aus dem gesteuerten Abkühlen herausgenommen wird und in dem chemischen Härtungs-Bad angeordnet wird, ohne dass ein unkontrollierter Abkühl-Prozess dazwischen liegt.

2. Verfahren gemäß Anspruch 1, wobei das Glasteil ein Aluminiumsilikat-Glasteil ist, dass durch das Float-Verfahren gebildet ist, und wobei die erste Temperatur in einem Bereich zwischen 540° C und 550° C liegt.

3. Verfahren gemäß Anspruch 2, wobei das Erhitzen des Glasteils auf eine erste Temperatur Aufrechterhalten der ersten Temperatur für eine Zeitlänge zwischen einer Stunde und fünf Stunden umfasst.

4. Verfahren gemäß einem der Ansprüche 1 bis 3, wobei das Glas für eine feste Zeitperiode auf der ersten Temperatur gehalten wird, wobei die erste Temperatur in einem Bereich zwischen 95 % und 105 % einer Verformungstemperatur des Glases liegt.

5. Verfahren (121) zum Verarbeiten einer Glasplatte, wobei die Glasplatte durch ein Fusionsverfahren oder ein Float-Verfahren gebildet ist, wobei das Verfahren aufweist:
Tempern (145) der Glasplatte, um eine getemperte Glasplatte bereitzustellen, wobei Tempern der Glasplatte zumindest Erhitzen der Glasplatte auf eine erste Temperatur und Abkühlen der Glasplatte auf eine zweite Temperatur unter Verwendung eines gesteuerten Abkühl-Prozesses umfasst,
und **gekennzeichnet durch** Bearbeiten (129) der Glasplatte, um ein getempertes Glasabdeckungsteil einer handgehaltenen elektronischen Vorrichtung aus der spannungsfreien getemperten Glasplatte zu erzeugen;
wobei das Bearbeiten der Glasplatte Erzeugen eines Glasteiles aus der Glasplatte umfasst; und
chemisches Härten (133) des Glases, wobei das chemische Härten des Glasteils umfasst:
Anordnen der Glasplatte in einem chemischen Härtungs-Bad; und
Erleichtern eines Ionenaustausches zwischen Ionen, die in dem Glasteil enthalten sind, und Ionen, die in dem chemischen Härtungs-Bad enthalten sind;
wobei das chemische Härten des Glasteils der handgehaltenen elektronischen Vorrichtung ein getempertes und chemisch gehärtetes Glasteil für die handgehaltene elektronische Vorrichtung bereitstellt, und
wobei das Glasteil aus dem gesteuerten Abkühlen herausgenommen wird und in das chemische Härten gebracht wird, ohne dass ein unkontrollierter Abkühl-Prozess dazwischen liegt.

6. Verfahren gemäß Anspruch 5, wobei die Glasplatte eine Aluminiumsilikat-Glasplatte ist, die durch das Fusionsverfahren gebildet ist, und wobei die erste Temperatur in einem Bereich zwischen 500° C und 600° C liegt.

7. Verfahren gemäß einem der Ansprüche 5 bis 6, wobei die Glasplatte eine Aluminiumsilikat-Glasplatte ist, die durch das Fusionsverfahren gebildet ist, und wobei die erste Temperatur in einem Bereich zwischen 540° C und 550° C liegt.

8. Verfahren gemäß Anspruch 7, wobei das Erhitzen der Glasplatte auf die erste Temperatur Aufrechterhalten der ersten Temperatur über eine Zeitlänge zwischen einer Stunde und fünf Stunden umfasst.

9. Verfahren gemäß einem der vorangehenden Ansprüche, wobei die zweite Temperatur zwischen 100° C und 150° C liegt, niedriger als die erste Temperatur, und wobei der gesteuerte Abkühl-Prozess eingerichtet ist, um die Glasplatte bei einer festen Rate abzukühlen.

10. Verfahren gemäß Anspruch 9, wobei die feste Rate 0,5° C pro Minute ist.

11. Verfahren gemäß Anspruch 7, wobei das Abkühlen der Glasplatte auf die zweite Temperatur Abkühlen der Glasplatte für bis zu fünf Stunden umfasst.

12. Verfahren gemäß einem der Ansprüche 5 bis 11, wobei das Bearbeiten der Glasplatte zumindest eines ausgewählt aus einer Gruppe umfasst, die umfasst Anreißen, Brechen und Schneiden der Glasplatte.

## Revendications

1. Un procédé (101) de traitement d'une pièce en verre d'un dispositif électronique tenant dans la main, la pièce en verre étant formée par un processus de fusion ou un processus par flottage, le procédé comprenant :
le recuit (109) de la pièce en verre du dispositif électronique tenant dans la main, le recuit de la pièce en verre comprenant au moins :
le chauffage à une première température de la pièce en verre,
le maintien de la première température pendant un laps de temps prédéterminé, et
le refroidissement à une seconde température de la pièce en verre par utilisation d'un processus de refroidissement contrôlé,
et **caractérisé par** le durcissement chimique (117) de la pièce en verre, le durcissement chimique de la pièce en verre comprenant :
le placement de la pièce en verre du dispositif électronique tenant dans la main dans un bain de durcissement chimique ; et
la facilitation d'un échange d'ions entre des ions inclus dans la pièce en verre et des ions inclus dans le bain de durcissement chimique ;
dans lequel le durcissement chimique de la pièce en verre du dispositif électronique tenant dans la main donne une pièce en verre recuite et chimiquement durcie destinée au dispositif électronique tenant dans la main, et
dans lequel la pièce en verre est sortie du refroidissement contrôlé et placée dans le bain de durcissement chimique sans processus de refroidissement intermédiaire incontrôlé.

2. Le procédé de la revendication 1, dans lequel la pièce en verre est une pièce en verre aluminosilicate formée par le processus par flottage, et dans lequel la première température est dans une plage comprise entre 540 degrés Celsius et 550 degrés Celsius.

3. Le procédé de la revendication 2, dans lequel le chauffage de la pièce en verre à la première température comprend le maintien de la première température pendant une longueur de temps comprise entre une heure et cinq heures.

4. Le procédé de l'une des revendications 1 à 3, dans lequel le verre est maintenu à la première température pendant un laps de temps fixe, la première température étant dans une plage comprise entre 95 % et 105 % d'une température de déformation du verre.

5. Un procédé (121) de traitement d'une feuille de verre, la feuille de verre étant formée par un processus de fusion ou un processus par flottage, le procédé comprenant :
le recuit (125) de la feuille de verre pour produire une feuille de verre recuite, le recuit de la feuille de verre comprenant au moins le chauffage à une première température de la feuille de verre et le refroidissement à une seconde température de la feuille de verre par utilisation d'un processus de refroidissement contrôlé,
et **caractérisé par** l'usinage (129) de la feuille de verre pour créer à partir de la feuille de verre recuite libérée des contraintes une pièce de fermeture en verre d'un dispositif électronique tenant dans la main ;
dans lequel l'usinage de la feuille de verre comprend la création d'une pièce en verre à partir de la feuille de verre ; et
le durcissement chimique (133) du verre, le durcissement chimique de la pièce en verre comprenant :
le placement de la feuille de verre dans un bain de durcissement chimique ; et
la facilitation d'un échange d'ions entre des ions inclus dans la pièce en verre et des ions inclus dans le bain de durcissement chimique ;
dans lequel le durcissement chimique de la pièce en verre du dispositif électronique tenant dans la main donne une pièce en verre recuite et chimiquement durcie destinée au dispositif électronique tenant dans la main, et
dans lequel la pièce en verre est sortie du refroidissement contrôlé et placée dans le bain de durcissement chimique sans processus de refroidissement intermédiaire incontrôlé.

6. Le procédé de la revendication 5, dans lequel la feuille de verre est une feuille de verre aluminosilicate formée par le processus de fusion, et dans lequel la première température est dans une plage comprise entre 500 degrés Celsius et 600 degrés Celsius.

7. Le procédé de l'une des revendications 5 à 6, dans lequel la feuille de verre est une feuille de verre aluminosilicate formée par le processus de fusion, et dans lequel la première température est dans une plage comprise entre 540 degrés Celsius et 550 degrés Celsius.

8. Le procédé de la revendication 7, dans lequel le chauffage à la première température de la feuille de verre comprend le maintien de la première température pendant une longueur de temps comprise entre une heure et cinq heures.

9. Le procédé de l'une des revendications précédentes, dans lequel la seconde température est comprise entre 100 degrés Celsius et 150 degrés Celsius de moins que la première température, et dans lequel le processus de refroidissement contrôlé est conçu pour refroidir la feuille de verre à une vitesse fixe.

10. Le procédé de la revendication 9, dans lequel la vitesse fixe est de 0,5 degré Celsius par minute.

11. Le procédé de la revendication 7, dans lequel le refroidissement de la feuille de verre à la seconde température comprend le refroidissement de la feuille de verre pendant un temps allant jusqu'à cinq heures.

12. Le procédé de l'une des revendications 5 à 11, dans lequel l'usinage de la feuille de verre comprend au moins l'une choisie dans un groupe comprenant la gravure, la rupture, et la découpe de la feuille de verre.
